Europäisches Patentamt

European Patent Office

Office européen des brevets

(19)

(11) Veröffentlichungsnummer : **0 032 205**
**B1**

(12) **EUROPÄISCHE PATENTSCHRIFT**

(45) Veröffentlichungstag der Patentschrift :
22.06.83

(51) Int. Cl.³ : **H 04 M   9/04**

(21) Anmeldenummer : **80107740.5**

(22) Anmeldetag : **09.12.80**

(54) **Tastengesteuerte Wechsel-, Gegen- oder Lautsprechanlage.**

(30) Priorität : **11.01.80 DE 3000858**

(43) Veröffentlichungstag der Anmeldung :
**22.07.81 Patentblatt 81/29**

(45) Bekanntmachung des Hinweises auf die Patenterteilung : **22.06.83 Patentblatt 83/25**

(84) Benannte Vertragsstaaten :
**AT BE CH GB LI NL SE**

(56) Entgegenhaltungen :
**EP A 0 018 844**
**DE B 2 837 950**
**GB A 2 060 316**
**ERICSSON REVIEW, Band 56, Nr. 3, 1979, Seiten
124-129 Stockholm, SW. G. JISMALM et al. :
« Office communication system DIAVOX 824 »
Elektro Anzeiger, 1978, Nr. 17, Seiten 21-23**

(73) Patentinhaber : **Neumann Elektronik GmbH
Bülowstrasse 104 - 110
D-4330 Mülheim 1 (DE)**

(72) Erfinder : **Neumann, Dirk, Dipl.-Ing.
Schemelsbruch 11
D-4330 Mülheim 1 (DE)** ·

(74) Vertreter : **Feder, Heinz, Dr. et al
Postfach 11 04 26
D-4000 Düsseldorf 11 (DE)**

Tastengesteuerte Wechsel-, Gegen- oder Lautsprechanlage

Gegenstand der Erfindung ist eine tastengesteuerte Wechsel-, Gegen- oder Lautsprechanlage, bei der jede Teilnehmerstelle mit einer vorgegebenen Anzahl anderer Teilnehmerstellen in Verbindung treten kann und bei der die Durchschaltung der Ruf- und Verbindungswege automatisch über eine Zentrale erfolgt, an welche Teilnehmerstellen über Linien- und Verbindungsleitungen angeschlossen sind.

Gemäß Zeitschrift « Elektro Anzeiger », 1978, Nr. 17, S. 21-23 kann bei einer Vermittlungseinrichtung für eine derartige Anlage der Verdrahtungsaufwand in der Zentrale beträchtlich verringert werden und ein übersichtlicher und leicht erweiterbarer Aufbau einer zentralen Vermittlungseinrichtung erhalten werden, wenn in der Zentrale ein Mikrocomputer angeordnet ist, der über Gleichspannungssignale aufnehmende bzw. abgebende Ein-Ausgabeeinheiten mit den in der Zentrale angeordneten Ruf- und Verbindungsschaltungen verbunden ist, welche auf drei voneinander getrennten Typen von Einschüben angeordnet sind, wobei von jedem Typ mindestens ein Einschub vorhanden ist, nämlich Linieneinschübe, auf denen Koppelungsschaltungen angeordnet sind, über die jede Linie mit einer der Ein-Ausgabeeinheiten gleichstrommäßig verbunden ist, Verbindungseinschübe, auf denen für jede vorgegebene Verbindungsmöglichkeit eine elektronisch ansteuerbare Verbindungsschaltvorrichtung angeordnet ist, deren Steuereingang mit einer der Ein-Ausgabeeinheiten verbunden ist und Sprechstelleneinschübe, auf denen für jede Teilnehmerstelle ein Übertrager angeordnet ist, dessen Primärwicklung jeweils mit einer Teilnehmerstelle verbunden ist, wobei eine Mittelanzapfung der Primärwicklung über eine der Ein-Ausgabeeinheiten mit einer Spannungsquelle verbindbar ist und dessen Sekundärwicklung mittels einer vorgegebenen Auswahl der elektronisch ansteuerbaren Verbindungsschaltvorrichtungen jeweils mit der Sekundärwicklung der ausgewählten anderen Übertrager verbindbar ist und die Durchschaltung der Linien- und Verbindungswege programmgesteuert vom Mikrocomputer aus erfolgt.

Es hat sich nun gezeigt, daß es sehr vorteilhaft ist, wenn an eine Vermittlungseinrichtung der oben angegebenen Art auch Teilnehmerstellen anschließbar sind, die mit der Zentrale nicht durch Linien- und Verbindungsleitungen verbunden sind, sondern auch Teilnehmerstellen, die mit der Zentrale über eine Vierdrahtleitung verbunden sind.

Gerade für Teilnehmerstellen, von denen aus eine große Anzahl von anderen Teilnehmerstellen erreicht werden soll, kann auf diese Weise der Verdrahtungsaufwand zwischen Teilnehmerstelle und Zentrale erheblich herabgesetzt werden, da bei einer Teilnehmerstelle, die über Linienleitungen mit der Zentrale verbunden ist, für jede Linie eine eigene Leitung zur Zentrale geführt werden muß.

Der Erfindung lag die Aufgabe zugrunde, eine Teilnehmerstelle zu schaffen, welche an eine Vermittlungseinrichtung der oben angegebenen Art anschließbar ist und gleichzeitig die Vermittlungseinrichtung so zu ergänzen, daß der Anschluß einer derartigen Teilnehmerstelle möglich wird.

Die Lösung dieser Aufgabe erfolgt erfindungsgemäß dadurch, daß an die Zentrale zusätzlich mindestens eine Teilnehmerstelle über eine Vierdrahtleitung angeschlossen ist und in dieser Teilnehmerstelle ein Rufsender zur Aussendung codierter Rufsignale, ein Ruftastenfeld zur Ansteuerung des Rufsenders, eine Hör-Sprech-Einrichtung sowie eine tastengesteuerte Schaltvorrichtung zur Umschaltung der Hör-Sprech-Einrichtung auf Sprechen und zur Ein-Ausschaltung einer Anzeigevorrichtung für Anruf- und Besetztmeldungen angeordnet sind und in der Zentrale mindestens ein Einschub eines weiteren Typs vorhanden ist, nämlich ein Vierdraht-Linieneinschub, auf dem ein Rufempfänger zum Empfang der codierten Rufsignale und ein Decoder zum Umsetzen der Rufsignale auf eine vorgegebene Anzahl von Linien angeordnet sind und jeder, einer Linie zugeordnete Ausgang des Decoders mit einem Eingang der Ein-Ausgabeeinheiten und mit einem Eingang eines UND-Gatters verbunden ist, dessen anderer Eingang mit dem dieser Linie zugeordneten Ausgang der Ein-Ausgabe-Einheiten verbunden ist und die Ausgänge aller einem Decoder zugeordneten UND-Gatter mit der Mittelanzapfung der Primärwicklung des dieser Teilnehmerstelle zugeordneten, auf einem der Sprechstelleneinschübe angeordneten Übertragers verbunden sind und daß über das erste Leitungpaar der Vierdrahtleitung der Rufsender mit dem Rufempfänger sowie die Betriebsspannungseingänge der Teilnehmerstelle mit einer in der Zentrale angeordneten Spannungsquelle und über das zweite Leitungpaar der Vierdrahtleitung die Hör-Sprecheinrichtung mit der Primärwicklung des ihr zugeordneten Übertragers, sowie die Anzeigevorrichtungen für Anruf- und Besetztmeldungen über die Mittelanzapfung der Primärwicklung des Übertragers mit den Ausgängen der Ein-Ausgabe-Einheiten zur Abgabe von Anruf- und Besetztmeldungen verbunden sind.

Bei der erfindungsgemäßen Anlage ist es möglich, an die Zentrale einerseits in der bereits vorgeschlagenen Weise Teilnehmerstellen über Linien- und Verbindungsleitungen und andererseits in der erfindungsgemäßen Weise Teilnehmerstellen über Vierdrahtleitungen an die Zentrale anzuschließen.

Es muß hierzu lediglich für jede der über eine Vierdrahtleitung an die Zentrale angeschlossenen Teilnehmerstellen in der Zentrale ein an die Erfordernisse solcher Teilnehmerstellen besonders angepaßter Einschub angeordnet sein.

Dieser Einschub entspricht in etwa den Linieneinschüben, an welche die über Linienleitungen angeschlossenen Teilnehmerstellen angeschlossen sind. Auf den Sprechstelleneinschüben ist für jede der über eine Vierdrahtleitung angeschlossenen Sprechstellen ein besonderer Übertrager vorgesehen.

Wie bei der bereits vorgeschlagenen Anlage, können die nunmehr vier grundsätzlich voneinander verschiedenen Typen von Einschüben als Steckkarten ausgebildet sein. Jeder Einschub besitzt eine bestimmte Anzahl von Ein- bzw. Ausgängen und wird von einer der Ein-Ausgabeeinheiten für sich angesteuert. Das Programm des Mikrocomputers ist dabei in grundsätzlich bekannter Weise so aufgebaut, daß sämtliche Schaltfunktionen zur Durchschaltung der Ruf- und Sprechverbindungen zum richtigen Zeitpunkt ausgelöst werden.

Bei Änderungen oder Erweiterungen der Anlage genügt es, die Zentrale durch Hinzufügen entsprechender Einschübe zu erweitern und dem Mikrocomputer ein entsprechend abgeändertes Programm einzugeben.

Alle Vorteile der Vermittlungseinrichtung gemäß dem älteren Vorschlag sind auch bei der erfindungsgemäßen Anlage gegeben.

So können auch bei der erfindungsgemäßen Anlage auf jedem Einschub die jeweils mehreren Linien, bzw. Verbindungen, bzw. Sprechstellen zugeordneten Schaltungen angeordnet sein.

Im folgenden wird anhand der beigefügten Zeichnungen ein Ausführungsbeispiel für die erfindungsgemäße Anlage näher erläutert.

Figur 1 zeigt im Blockschaltbild den grundsätzlichen Aufbau der erfindungsgemäßen Anlage.

Die Figuren 2 und 3 zeigen etwas ausführlicher den Aufbau einer Vermittlungseinrichtung mit vier Linien-Teilnehmerstellen und einer Vierdraht-Teilnehmerstelle, wobei Fig. 2 den rechts von der Linie II-III in Fig. 1 angeordneten Teil der Schaltung darstellt, während Fig. 3 den links von der Linie II-III in Fig. 1 angeordneten Teil der Schaltung darstellt.

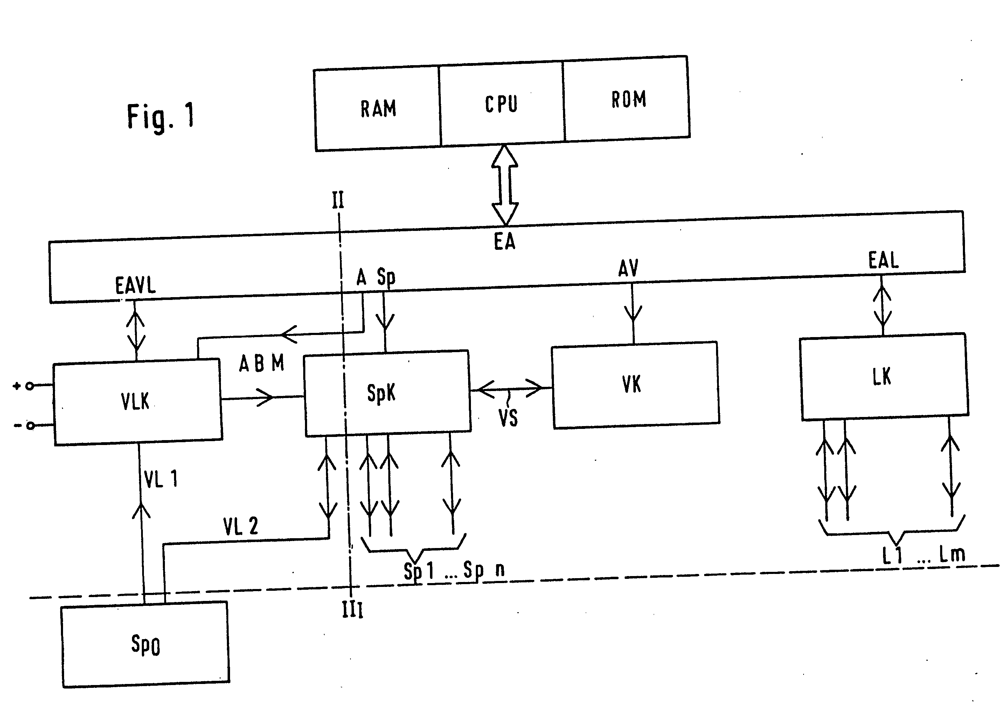

Fig. 1 zeigt den grundsätzlichen Aufbau der zentralen Vermittlungseinrichtung einer Wechsel-, Gegen- oder Lautsprechanlage, bei der n + 1 Sprechstellen vorhanden sind, von denen n-Sprechstellen über insgesamt m-Linien in nicht dargestellter Weise mit der Zentrale verbunden sind und eine Sprechstelle SpO über eine Vierdrahtleitung mit der Zentrale verbunden ist.

Die Vermittlungseinrichtung enthält einen programmgesteuerten Mikroprozessor CPU mit einem Arbeitsspeicher RAM und einem Programmspeicher ROM. An den Mikrocomputer CPU-ROM-RAM sind in bekannter Weise über BUS-Leitungen die hier gemeinsam mit EA bezeichneten Ein-Ausgabeeinheiten angeschlossen. Wie viele dieser Ein-Ausgabeeinheiten benötigt werden, richtet sich nach dem Aufbau des verwendeten Mikroprozessors und der verwendeten Ein-Ausgabeeinheiten, sowie nach der Größe der Gesamtanlage. Die Ein-Ausgabeeinheiten EA besitzen Gruppen von Eingängen und Ausgängen. In Fig. 1 sind der besseren Übersichtlichkeit wegen die einzelnen Gruppen von Ein- und Ausgängen jeweils durch einen Ausgang bzw. Ein-Ausgang symbolisiert. So ist für jede der Linien L1 bis Lm ein eigener Ein-Ausgang EAL an der Ein-Ausgabeeinheit EA vorhanden. Weiterhin ist für jede Verbindungsschaltvorrichtung ein eigener Ausgang AV vorhanden und außerdem für jede Sprechstelle ein Ausgang ASP, sowie für jede der Vierdraht-Teilnehmerstelle SpO zugeordnete Linie ein Ein-Ausgang EAVL.

An die Ein-Ausgänge EAL sind die Linieneinschübe LK angeschlossen, auf denen sich die Koppelschaltungen für die Linien L1 bis Lm befinden, die weiter unten näher erläutert werden.

An die Ausgänge AV sind die Verbindungseinschübe VK angeschlossen, auf denen sich die Verbindungsschaltungen befinden und an die Ausgänge ASp sind die Sprechstelleneinschübe SpK angeschlossen, die einerseits mit den Sprechstellen Sp1 bis Spn verbunden sind und andererseits über eine mit VS symbolisierte Gruppe von Verbindungen mit den Verbindungsschaltvorrichtungen auf den Verbindungseinschüben VK.

Die Vierdraht-Teilnehmerstelle SpO ist über ein erstes Leitungspaar VL1 mit einem Vierdraht-Linieneinschub VLK und über ein zweites Leitungspaar VL2 mit einem der Sprechstelleneinschübe SpK verbunden, der zusätzlich über eine Leitung ABM mit dem Vierdraht-Linieneinschub VLK verbunden ist. Der Vierdrahtlinieneinschub VLK ist einerseits mit den Ein-Ausgängen EAVL und andererseits mit einem der Ausgänge ASp verbunden.

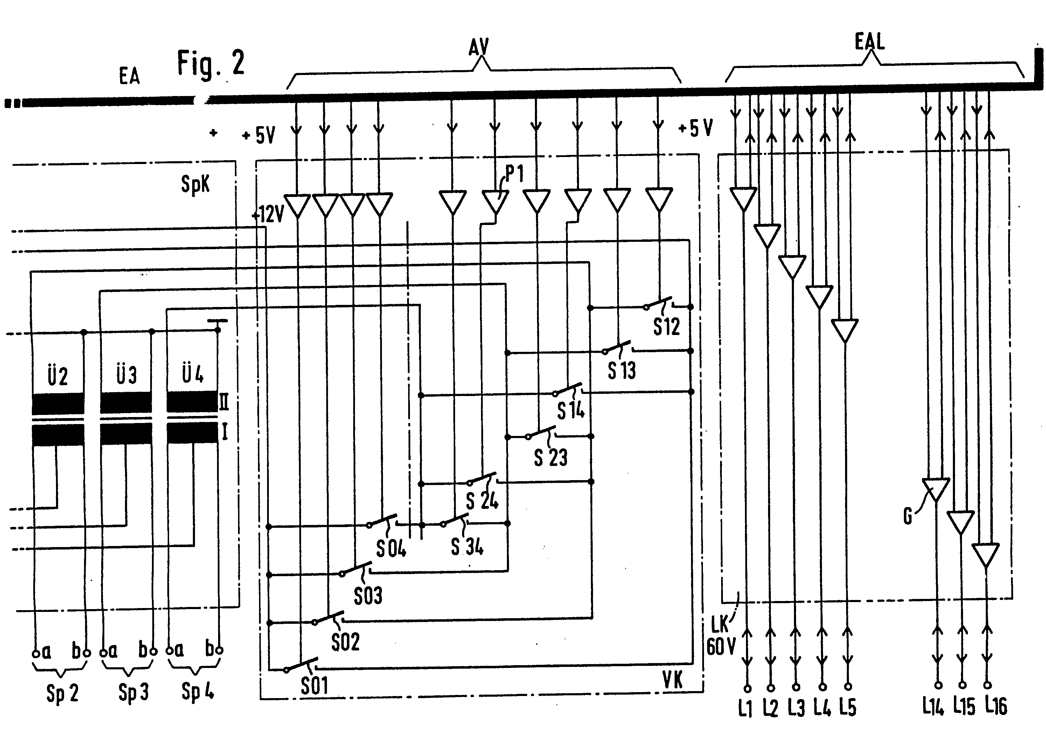

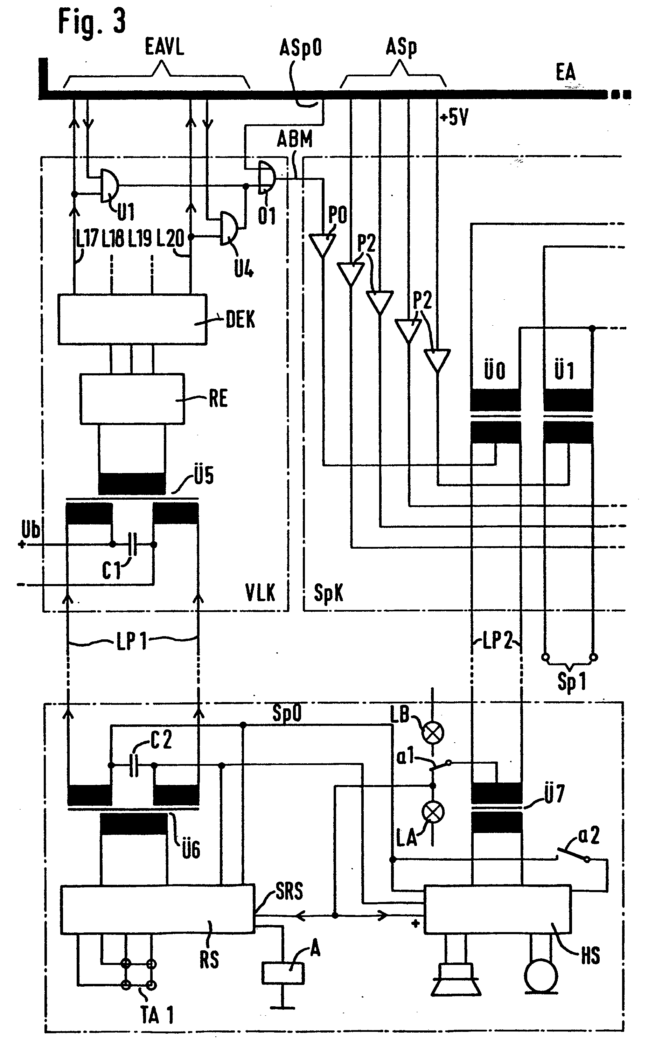

In den Fig. 2 und 3 ist eine Anlage mit insgesamt fünf Teilnehmerstellen dargestellt, anhand der die Funktionsweise der Anlage nunmehr näher erläutert wird.

Vier nicht näher dargestellte Teilnehmerstellen Sp1 bis Sp4 sind über Linienleitungen und Verbindungsleitungen mit der Zentrale verbunden, während eine Teilnehmerstelle SpO über eine Vierdrahtleitung VL1-VL2 mit der Zentrale verbunden ist. Es sei angenommen, daß jede der fünf Sprechstellen mit jeder anderen in Verbindung treten können soll. Dies bedeutet, daß für die Teilnehmerstellen, die über Linienleitungen angeschlossen sind, insgesamt 16 Linien L1 bis L16 und sechs Verbindungsschaltvorrichtungen S12 bis S34 vorhanden sind. Auf dem Linieneinschub LK befinden sich bei dem dargestellten Ausführungsbeispiel (Fig. 2) sechzehn Gabelschaltungen G, die in bekannter Weise aufgebaut sein können. Durch diese Gabelschaltungen wird die Betriebsspannung der Linien von 60V auf die Betriebsspannung der Ein-Ausgabeeinheit von 5V umgesetzt, und es werden die von jeder der Linien ausgehenden und jeder der Linien zugeführten Ruf- und Besetztmeldungssignale auf die getrennten Eingänge und Ausgänge EAL der Ein-Ausgabeeinheit EA verteilt.

Auf dem Verbindungseinschub VK sind insgesamt zehn Verbindungsschaltvorrichtungen S01, S02, S03, S04, S12, S13, S14, S23, S24, S34 angeordnet, die zweckmäßig als integrierte Halbleiterschaltungen aufgebaut sind. Die Ansteuereingänge dieser Verbindungsschaltvorrichtungen erhalten die Steuersignale über Verstärker P1 von entsprechenden Ausgängen AV von der Ein-Ausgabeeinheit EA her.

Auf dem Verbindungseinschub SpK sind fünf Übertrager Ü0, Ü1, Ü2, Ü3, Ü4 angeordnet. Die Primärwicklungen der Übertrager Ü1 bis Ü4 sind über die Sprechleitungen a-b mit den nicht dargestellten Teilnehmerstellen Sp1, Sp2, Sp3 und Sp4 verbunden. Eine Mittelanzapfung der Primärwicklungen der Übertrager Ü1 bis Ü4 ist jeweils über einen Verstärker P2 mit einem Ausgang ASp der Ein-Ausgabeeinheit EA verbunden.

Die Sekundärwicklung der Übertrager Ü0 bis Ü4 ist jeweils mit einem Ende an Erde angeschlossen, während das andere Ende jeweils mit den Verbindungsschaltvorrichtungen auf dem Einschub VK verbunden ist, über den die Verbindung der betreffenden Sekundärwicklung des Übertragers mit den Sekundärwicklungen der jeweils vier anderen Übertrager erfolgen kann.

Die Verbindungsschaltvorrichtungen SO1 bis SO4 auf dem Verbindungseinschub VK, sowie der Übertrager Ü0 auf dem Sprechstelleneinschub SpK, sind der Teilnehmerstelle SpO zugeordnet.

Diese besitzt einen über ein Tastenfeld TA1 ansteuerbaren Rufsender RS, von dem codierte Rufsignale über einen Übertrager Ü6 auf das erste Leitungspaar LP1 der Vierdrahtleitung gegeben werden.

Weiterhin besitzt sie eine Hör-Sprech-Einrichtung HS, deren NF-Eingang über einen Übertrager Ü7 und das zweite Leitungspaar LP2 der Vierdrahtleitung mit der Primärwicklung des Übertragers Ü0 auf dem Sprechstelleneinschub SpK verbunden ist.

Der Teilnehmerstelle SpO ist weiterhin ein eigener Vierdraht-Linieneinschub VLK zugeordnet, auf dem ein Rufempfänger RE angeordnet ist, dem ein Übertrager Ü5 vorgeschaltet ist und dem die über das erste Leitungspaar LP1 ankommenden Rufsignale zugeführt werden. Diese werden in einem Decoder DEK auf vier, den Teilnehmerstellen Sp1 bis Sp4 zugeordnete Linien L17 bis L20 umgesetzt. Die Linien L17 bis L20 sind einerseits mit Eingängen EAVL der Ein-Ausgabeeinheit EA und andererseits jeweils mit einem Eingang eines UND-Gatters U1, U4 verbunden. Der andere Eingang der UND-Gatter U1, U4 ist mit dem der jeweiligen Linie zugeordneten Ausgang EAVL der Ein-Ausgabeeinheit EA verbunden. Die Ausgänge der UND-Gatter U1, U4 sind über ein ODER-Gatter O1 und einen Verstärker PO mit der Mittelanzapfung der Primärwicklung des Übertragers Ü0 verbunden. Über den zweiten Eingang des ODER-Gatters O1 ist ein, die Anrufsignale abgebender Ausgang ASpo der Ein-Ausgabeeinheit EA mit der Mittelanzapfung der Primärwicklung des Übertragers Ü0 verbunden.

Über das erste Leitungspaar LP1 wird weiterhin die Betriebsspannung Ub der Teilnehmerstelle SpO zugeführt. Dies geschieht, indem die Wicklungen der Übertrager Ü5 und Ü6, an welche das erste Leitungspaar LP1 angeschlossen ist, aufgetrennt und die Trennstelle durch Kondensatoren C1 und C2 überbrückt ist. Die Speisespannung wird an den beiden Elektroden des Kondensators C1 zugeführt und an den beiden Elektroden des Kondensators C2 abgeführt.

Die an das zweite Leitungspaar LP2 angeschlossene Wicklung des Übertragers Ü7 besitzt eine Mittelanzapfung, welche über einen Relaiskontakt a1 mit einer Anzeigevorrichtung LA für eine Anrufsmeldung bzw. einer Anzeigevorrichtung LB für eine Besetztmeldung verbindbar ist. Der Relaiskontakt a1 wird über ein vom Tastenfeld TA1 aus betätigbares Relais A angesteuert. Dieses Relais A besitzt einen weiteren Relaiskontakt a2, durch den eine Umschaltung der Hör-Sprecheinrichtung (HS) von Hören auf Sprechen erfolgt.

Die Funktionsweise der dargestellten Anlage ist folgende :

Vom Mikroprozessor CPU werden über das BUS-System die Linieneingänge EAL sowie die Eingänge EAVL laufend auf den neuesten Zustand abgefragt. Die abgefragten Zustände werden mit dem im Arbeitsspeicher RAM abgebildeten Zustand verglichen. Der Zustand an den Linieneingängen ändert sich, wenn eine Linientaste betätigt wird. Der Zustand an den Eingängen EAVL ändert sich, wenn eine der Tasten des Tastenfeldes TA1 am Rufsender RS betätigt wird. Aufgrund der eingetretenen Zustandsänderung liest der Mikroprozessor CPU aus einer im Programm enthaltenen Verbindungstabelle die aktuelle Ausgangskonfiguration für die Linienausgänge EAL, die Linien-Vierdrahtausgänge EAVL, die Verbindungsausgänge AV und die Sprechstellenausgänge ASp. Über das interne BUS-System wird die neue Ausgangskonfiguration den Ein-Ausgabeeinheiten EA mitgeteilt. Dies bewirkt, daß die entsprechende Verbindungsschaltvorrichtung durchgeschaltet wird und von den Ausgängen ASp aus den Primärwicklungen der Übertrager Ü1 bis Ü4 über die Verstärker P2 eine Speisespannung von 60V zugeführt wird. Auf diese Weise ist die Sprechverbindung zwischen den Sprechstellen Sp1 bis Sp4 herstellbar. Weiterhin werden über die entsprechenden Ausgänge EAL und die diesen zugeordneten Linien den übrigen Sprechstellen Besetztmeldungen zugeführt.

Soll von einer der Sprechstellen Sp1 bis Sp4 aus die Teilnehmerstelle SpO gerufen werden, so wird über den Ausgang für Anrufsmeldung ASpo, das ODER-Gatter O1, den Verstärker PO und das zweite Leitungspaar LP2 eine Anrufsmeldung gegeben und die Anzeigevorrichtung LA zeigt dies an. Gleichzeitig wird die Hör-Sprech-Einrichtung HS eingeschaltet und über den Sperreingang SRS am Rufsender RS das Ruftastenfeld TA1 sowie das Relais A gesperrt, so daß in diesem Augenblick kein Ruf von SpO aus abgehen kann.

Wird von der Teilnehmerstelle SpO aus eine der anderen Sprechstellen gerufen, beispielsweise über die Linie L17, so wird die entsprechende Taste des Tastenfeldes TA 1 gedrückt, wodurch einerseits das Relais A betätigt wird und andererseits das entsprechende Rufsignal dem Eingang EAVL und dem einen Eingang des UND-Gatters U1 zugeführt wird. Ist die andere Teilnehmerstelle frei, so erfolgt in der analog beschriebenen Weise die Durchschaltung der Verbindung mittels einer der Durchschaltvorrichtungen SO1 bis SO4 über den Übertrager Ü0 sowie einen der Übertrager Ü1 bis Ü4. Ist die andere Teilnehmerstelle besetzt, so liegt am anderen Eingang des UND-Gatters U1 ein von der Ein-Ausgabeeinheit EA über den Ausgang EAVL abgegebenes Besetztsignal an. Dies hat zur Folge, daß über das ODER-Gatter O1 und die Übertrager Ü0 und Ü7 ein Signal abgegeben wird, welches über den Relaiskontakt a1 in Arbeitsstellung die Anzeigevorrichtung LB ansteuert. Der Besetztzustand dieser Sprechstelle kann also vom Anrufer sofort nach Drücken der Taste am Tastenfeld TA1 erkannt werden.

Die Tasten des Tastenfeldes TA1 an der Sprechstelle SpO haben also die gleiche Funktion, wie die Linientasten der übrigen Sprechstellen Sp1 bis Sp4. Sie sind gleichzeitig Ruftasten und Sprechtasten. Ein eventueller Besetztzustand einer angerufenen Sprechstelle kann sofort nach Drücken der entsprechenden Taste erkannt werden.

Anschließend an jeden Änderungsvorgang in der Gesamtanlage wird vom Mikroprozessor CPU die interne Abbildung der Linieneingänge auf den neuesten Stand gebracht. Solange keine weitere Änderung eintritt, werden zwar laufend alle Linieneingänge abgefragt, die Ausgänge aber nicht beeinflußt.

**Ansprüche**

1. Tastengesteuerte Wechsel-, Gegen- oder Lautsprechanlage, bei der jede Teilnehmerstelle mit einer vorgegebenen Anzahl anderer Teilnehmerstellen in Verbindung treten kann, und bei der die Durchschaltung der Ruf- und Verbindungswege automatisch über eine Zentrale erfolgt, an welche Teilnehmerstellen (Sp1-Spn) über Linien- und Verbindungsleitungen (L1-Lm) angeschlossen sind und in der ein Mikrocomputer (CPU, RAM, ROM) angeordnet ist, der über Gleichspannungssignale aufnehmende bzw. abgebende Ein- und Ausgabeeinheiten (EA) mit den in der Zentrale angeordneten Ruf- und Verbindungsschaltungen verbunden ist, welche auf drei voneinander getrennten Typen von Einschüben angeordnet sind, wobei von jedem Typ mindestens ein Einschub vorhanden ist, nämlich Linieneinschübe (LK), auf denen Koppelungsschaltungen angeordnet sind, über die jede Linie mit einer der Ein- Ausgabeeinheiten gleichstrommäßig verbunden ist, Verbindungseinschübe (VK), auf denen für jede vorgegebene Verbindungsmöglichkeit eine elektronisch ansteuerbare Verbindungsschaltvorrichtung angeordnet ist, deren Steuereingang mit einer der Ein- Ausgabeeinheiten verbunden ist und Sprechstelleneinschübe (SPK), auf denen für jede Teilnehmerstelle (Sp1-Spn) ein Übertrager (Ü1-Ü4) angeordnet ist, dessen Primärwicklung (I) jeweils mit einer Teilnehmerstelle verbunden ist, wobei eine Mittelanzapfung der Primärwicklung (I) über eine der Ein-Ausgabeeinheiten (EA) mit einer Spannungsquelle verbindbar ist und dessen Sekundärwicklung (II) mittels einer vorgegebenen Auswahl der elektronisch ansteuerbaren Verbindungsschaltvorrichtungen (S12, S13 ... S34) jeweils mit der Sekundärwicklung der ausgewählten anderen Übertrager verbindbar ist, und bei der die Durchschaltung der Linien- und Verbindungswege programmgesteuert vom Mikrocomputer (CPU, ROM, RAM) aus erfolgt, dadurch gekennzeichnet, daß an die Zentrale zusätzlich mindestens eine Teilnehmerstelle (SpO) über eine Vierdrahtleitung (VL1-VL2) angeschlossen ist und in dieser Teilnehmerstelle (SpO) ein Rufsender (RS) zur Aussendung codierter Rufsignale, ein Ruftastenfeld (TA1) zur Ansteuerung des Rufsenders (RS), eine Hör-Spracheinrichtung (HS) sowie eine tastengesteuerte Schaltvorrichtung (A, a1, a2) zur Umschaltung der Hör-Sprech-Einrichtung auf Sprechen und zur Ein-Ausschaltung einer Anzeigevorrichtung (LA, LB) für Anruf- und Besetztmeldungen angeordnet sind und in der Zentrale mindestens ein Einschub eines weiteren Typs vorhanden ist, nämlich ein Vierdraht-Linieneinschub (VLK), auf dem ein Rufempfänger (RE) zum Empfang der codierten Rufsignale und ein Decoder (DEK) zum Umsetzen der Rufsignale auf eine vorgegebene Anzahl von Linien (L17 bis L20) angeordnet sind und jeder einer Linie zugeordnete Ausgang des Decoders (DEK) mit einem Eingang (EAVL) der Ein-Ausgabeeinheiten (EA) und mit einem Eingang eines UND-Gatters (U1, U4) verbunden ist, dessen anderer Eingang mit dem dieser Linie zugeordneten Ausgang der Ein-Ausgabe-Einheiten (EAVL) verbunden ist, und die Ausgänge aller einem Decoder (DEK) zugeordneten UND-Gatter (U1, U4) mit der Mittelanzapfung der Primärwicklung des dieser Teilnehmerstelle (SpO) zugeordneten, auf einem der Sprechstelleneinschübe (SpK) angeordneten Übertragers (Ü-O) verbunden sind, und daß über das erste Leitungspaar (LP1) der Vierdrahtleitung der Rufsender (RS) mit dem Rufempfänger (RE), sowie die Betriebsspannungseingänge der Teilnehmerstelle (SpO) mit einer in der Zentrale angeordneten Spannungsquelle (Ub) und über das zweite Leitungspaar (LP2) der Vierdrahtleitung die Hör-Spracheinrichtung (HS) mit der Primärwicklung des ihr zugeordneten Übertragers (ÜO), sowie die Anzeigevorrichtungen (LA, LB) für Anruf- und Besetztmeldungen über die Mittelanzapfung der Primärwicklung des Übertragers (ÜO) mit den Ausgängen ASpo bzw. (EAVL) der Ein-Ausgabe-Einheiten (EA) zur Abgabe von Anruf- und Besetztmeldungen verbunden sind.

2. Anlage nach Anspruch 1, dadurch gekennzeichnet, daß die Besetztmeldungen abgebenden Ausgänge (EAVL) der Ein-Ausgabe-Einheiten (E-A) einerseits und der eine Anrufmeldung abgebende Ausgang (ASpo) der Ein-Ausgabe-Einheiten (EA) andererseits jeweils mit beiden Eingängen eines auf dem Vierdraht-Linien-einschub (VLK) angeordneten ODER-Gatters (O1) verbunden sind, dessen Ausgang mit der Mittelanzapfung der Primärwicklung des auf dem Sprechstelleneinschub (SpK) angeordneten Übertragers (ÜO) verbunden ist.

3. Anlage nach Anspruch 1 oder 2, dadurch gekennzeichnet, daß die Zuführung der Speisespannung zum ersten Leitungspaar (LP1) an einem, dem Rufempfänger (RE) vorgeschalteten, auf dem Vierdraht-Linieneinschub (VLK) angeordneten ersten Übertrager (Ü5) und ihre Abführung an einem, dem Rufsender (RS) nachgeschalteten, in der Teilnehmerstelle (SpO) angeordneten zweiten Übertrager (Ü6) geschieht, wobei jeweils die Wicklungen der Übertrager (Ü5, Ü6), an welche das erste Leitungspaar (LP1) angeschlossen ist, eine durch einen Kondensator (C1, C2) überbrückte Mittelanzapfung aufweisen und die Zu- und Abführung der Speisespannung an den beiden Elektroden der Kondensatoren (C1, C2) erfolgt.

4. Anlage nach einem der Ansprüche 1 bis 3, dadurch gekennzeichnet, daß der Hör-Sprech-Einrichtung ein in der Teilnehmerstelle (SpO) angeordneter dritter Übertrager (Ü7) vorgeschaltet ist, dessen mit dem zweiten Leitungspaar (LP2) verbundene Wicklung eine Mittelanzapfung besitzt, über welche die Anzeigevorrichtung (LA, LB) für Anruf- und Besetztmeldungen angeschlossen ist.

5. Anlage nach einem der Ansprüche 1 bis 4, dadurch gekennzeichnet, daß die tastengesteuerte Schaltvorrichtung (A, a1, a2) durch die Tasten des Ruftastenfeldes (TA1) angesteuert wird.

6. Anlage nach Anspruch 5, dadurch gekennzeichnet, daß die tastengesteuerte Schaltvorrichtung ein Relais (A) ist, wobei ein Relaiskontakt (a1) die Mittelanzapfung des dritten Übertragers (Ü7) in seiner Ruhestellung mit der Anzeigevorrichtung (LA) für die Anrufsmeldung, sowie mit einem Sperreingang (SRS) des Rufsenders (RS) und im Arbeitszustand mit der Anzeigevorrichtung (LB) für die Besetztmeldung verbindet.

## Claims

1. A key-controlled system for alternate, simultaneous or loud-speaking oral communication in which system each subscriber's station is adapted to be connected with a predetermined number of further subscriber's stations, and in which the connecting-through extension of the call and transmission circuits is established automatically through a central switchboard to which subscriber's stations (Sp1-Spn) are connected through line and connecting circuits (L1-Lm), and in which a micro-computer (CPU, RAM, ROM) is arranged, said micro computer being connected, through input and output units (EA) for receiving and emitting D.C. signals, with said call and transmission circuits arranged within said central switchboard on three different types of plug-in units, each type comprising at least one plug-in unit, namely line units (LK) having coupling circuits arranged thereon through which coupling circuits a D.C. connection is established between each line and one of the input and output units, junction units (VK) having arranged thereon an electronically controllable connection switching device for each of the predetermined possibilities of connection, the control input of said connection switching device being connected with one of the input and output units, and subscriber's station units (SpK) having arranged thereon a transmitter (Ü1-Ü4) for each of the subscriber's stations (Sp1-Spn), the primary winding (I) of said transmitter being connected with one each of said subscriber's stations, whereby a center tapping of said primary winding (I) is adapted to be connected to a voltage source through one of the input and output units (EA), and the secondary winding (II) of said transmitter being adapted to be connected, by means of a predetermined selection of the electronically controllable connection switching devices (S12, S13 ... S34), with the secondary winding of the selected further transmitters, and in which system the connecting-through extension of the line and connecting circuits is carried out in program-controlled manner by the micro-computer (CPU, RAM, ROM), characterized in that, additionally, at least one subscriber's station (SpO) is connected to the central switchboard through a four-wire circuit (VL1-VL2), whereby a call transmitter (RS) for emitting coded call signals, a call keyboard (TA1) for controlling said call transmitter (RS), a hearing and speaking equipment (HS), as well as a key-controlled switching mechanism (A, a1, a2) for changing said hearing and speaking equipment over to « speak » and for switching on and off an indicator (LA, LB) for call and busy signals, are arranged in the subscriber's station (SpO), and whereby at least one plug-in unit of a further type is privided in the central switchboard, namely a four-wire circuit unit (VLK) having arranged thereon a call receiver (RE) for receiving the coded call signals, and a decoder (DEK) for transposing the call signals to a predetermined number of circuits (L17-L20), each output of said decoder (DEK) associated with one circuit, being connected with one input (EAVL) of the input and output units (EA) and with one input of an AND-gate (U1, U4) the other input of which is connected with the output of said input and output units (EAVL) corresponding to said one circuit, and the outputs of all AND-gates (U1, U4) associated with one decoder (DEK) being connected with the center tapping of the primary winding of the transmitter (ÜO) associated with the subscriber's station (SpO) and arranged on one of the subscriber's station units (SpK), and that, through the first pair of lines (LP1) of the four-wire circuit, the call transmitter (RS) is connected with the call receiver (RE), while the operational voltage inputs of the subscriber's station (SpO) are connected with a voltage source (Ub) arranged in the central switchboard and while, through the second pair of lines (LP2) of said four-wire circuit, the hearing and speaking equipment (HS) is connected with the primary winding of the transmitter (ÜO) associated therewith, the indicators (LA, LB) for call and busy signals being connected, through the center tapping of the primary winding of said transmitter (ÜO), with the outputs (ASpO or EAVL) of the input and output units (EA) for emitting call and busy signals.

2. A system as claimed in claim 1, characterized in that, on one hand, the busy signal-emitting outputs (EAVL) of the input and output units (EA) and, on the other hand, the output (ASpO) of the latter which emits a call signal, are each connected with both inputs of an OR-gate (O1) arranged on the four-wire circuit unit (V1K), the output of said OR-gate being connected to the center tapping of the primary winding of the transmitter (ÜO) arranged on the subscriber's station unit (SpK).

3. A system as claimed in claim 1 or 2, characterized in that the supply voltage is fed to the first pair of lines (LP1) at a first transmitter (Ü5) preceding the call receiver (RE) and being arranged on the four-wire circuit unit (VLK), and is led away at a second transmitter (Ü6) following the call transmitter (RS) and being arranged in the subscriber's station (SpO), whereby those windings of the transmitters (Ü5, Ü6) to which the first pair of lines (LP1) is connected, each comprise a center tapping which is bridged by a capacitor (C1, C2), and whereby the supply voltage is fed and led away at the two electrodes of said capacitors (C1, C2).

4. A system as claimed in one of claims 1 to 3, characterized in that the hearing and speaking equipment is preceded by a third transmitter (Ü7) arranged in the subscriber's station (SpO), the winding of said transmitter which is connected with the second pair of lines (LP2), comprising a center tapping through which the indicator (LA, LB) for call and busy signals is connected.

5. A system as claimed in one of claims 1 to 4, characterized in that the key-controlled switching mechanism (A, a1, a2) is controlled by the keys of the call keyboard (TA1).

6. A system as claimed in claim 5, characterized in that the key-controlled switching mechanism is a relay (A), whereby a relay contact (a1), in its rest position, connects the center tapping of the third transmitter (Ü7) with the indicator (LA) for the call signal, as well as with a blocking input (SRS) of the call transmitter (RS) and, in its operational position, connects said center tapping with the indicator for the busy signal.

**Revendications**

1. Installation commandée par touches pour la communication orale alternative ou simultanée ou par haut-parleur, installation dans laquelle chaque poste d'abonné peut être mis en communication avec un nombre prédéterminé d'autres postes d'abonnés, tandis que l'interconnexion des parcours d'appel et de jonction a lieu automatiquement via un central auquel des postes d'abonnés (Sp1-Spn) sont raccordés via des câbles de lignes et de jonction (L1-Lm), installation dans laquelle est également installé un micro-ordinateur (CPU, RAM, ROM) qui est raccordé, via des unités d'entrée et de sortie recevant ou émettant des signaux de tension continue, aux circuits d'appel et de jonction installés dans le central et disposés sur trois types de tiroirs séparés l'un de l'autre, chaque type comportant au moins un tiroir, notamment des tiroirs de lignes (LK) sur lesquels sont disposés des circuits de couplage par lesquels chaque ligne est raccordée en courant continu à une des unités d'entrée/sortie, des tiroirs de jonction (VK) sur lesquels, pour chaque possibilité de jonction prédéterminée, est installé un dispositif de commutation de jonction pouvant être commandé électroniquement et dont une entrée de commande est raccordée à une des unités d'entrée/sortie, de même que des tiroirs de postes d'abonnés (SpK) sur lesquels est installé, pour chaque poste d'abonné (Sp1-Spn), un transformateur (Ü1-Ü4) dont l'enroulement primaire (I) est raccordé chaque fois à un poste d'abonné, une prise centrale de l'enroulement primaire (I) pouvant être raccordée, via une des unités d'entrée/sortie (EA), à une source de tension, tandis que l'enroulement secondaire (II) de ce transformateur peut être raccordé chaque fois, au moyen d'une sélection prédéterminée des dispositifs de commutation de jonction pouvant être commandés électroniquement (S12, S13 ... S34), à l'enroulement secondaire des autres transformateurs sélectionnés, tandis que l'interconnexion des parcours de lignes et de jonction a lieu sous la commande à programme du micro-ordinateur (CPU, ROM, RAM), caractérisée en ce qu'au moins un poste d'abonné (SpO) est, en outre, raccordé au central via un câble à quatre fils (VL1-VL2) et, dans ce poste d'abonné (SpO) sont installés un émetteur d'appel (RS) destiné à émettre des signaux d'appel codés, un clavier d'appel (TA1) en vue de commander l'émetteur d'appel (RS), un dispositif d'écoute/conversation (HS), ainsi qu'un dispositif de commutation (A, a1, a2) commandé par touches pour commuter ce dispositif d'écoute/conversation dans le mode de conversation, de même que pour la mise en et hors circuit d'un dispositif indicateur (LA, LB) pour les signalisations d'appel et d'occupation, le central comportant au moins un tiroir d'un autre type, notamment un tiroir de ligne à quatre fils (VLK) sur lequel est disposé un récepteur d'appel (RE) destiné à recevoir les signaux d'appel codés, de même qu'un décodeur (DEK) destiné à réémettre les signaux d'appel sur un nombre prédéterminé de lignes (L17 à L20), chaque sortie du décodeur (DEK) qui est attribuée à une ligne, étant raccordée à une entrée (EAVL) des unités d'entrée/sortie (EA) et à une entrée d'une porte ET (U1, U4) dont l'autre entrée est raccordée à la sortie des unités d'entrée/sortie (EAVL) qui est attribuée à cette ligne, tandis que les sorties de toutes les portes ET (U1, U4) attribuées à un décodeur (DEK) sont raccordées à la prise centrale de l'enroulement primaire du transformateur (ÜO) qui est attribué à ce poste d'abonné (SpO) et qui est disposé sur un des tiroirs de postes d'abonnés (SpK) et, via la première paire (LP1) du câble à quatre fils, l'émetteur d'appel (RS) est raccordé au récepteur d'appel (RE) et les entrées de tension de fonctionnement du poste d'abonné (SpO) sont raccordées à une source de tension (Ub) installée dans le central tandis que, via la deuxième paire (LP2) du câble à quatre fils, le dispositif d'écoute/conversation (HS) est raccordé à l'enroulement primaire du transformateur (ÜO) qui lui est attribué, et les dispositifs indicateurs (LA, LB) prévus pour les signalisations d'appel et d'occupation sont raccordés, via la prise centrale de l'enroulement primaire du transformateur (ÜO), aux sorties (ASpo ou EAVL) des unités d'entrée/sortie (EA) pour fournir des signalisations d'appel et d'occupation.

2. Installation suivant la revendication 1, caractérisée en ce que les sorties (EAVL) des unités d'entrée/sortie (EA), qui fournissent des signalisations d'occupation, d'une part, et la sortie (ASpo) des unités d'entrée/sortie (EA), qui fournit une signalisation d'appel, d'autre part, sont raccordées chaque fois aux deux entrées d'une porte OU (O1) installée sur le tiroir de ligne à quatre fils (VLK), la sortie de cette porte OU étant raccordée à la prise centrale de l'enroulement primaire du transformateur (ÜO) adapté sur le tiroir de poste d'abonné (SpK).

3. Installation suivant la revendication 1 ou 2, caractérisée en ce que l'acheminement de la tension d'alimentation à une première paire (LP1) a lieu sur un premier transformateur (Ü5) monté devant le récepteur d'appel (RE) et disposé sur le tiroir de ligne à quatre fils (VLK), tandis que la dérivation de cette tension a lieu à un deuxième transformateur monté à la suite de l'émetteur d'appel (RS) et installé dans le poste d'abonné (SpO), les enroulements des transformateurs (Ü5, Ü6) auxquels est raccordée la première paire (LP1) comportant chacun une prise centrale pontée par un condensateur (C1, C2), l'acheminement et la dérivation de la tension d'alimentation ayant lieu aux deux électrodes des condensateurs (C1, C2).

4. Installation suivant une des revendications 1 à 3, caractérisée en ce que, devant le dispositif d'écoute/conversation, est monté un troisième transformateur (Ü7) installé dans le poste d'abonné (SpO), l'enroulement de ce transformateur, qui est raccordé à la deuxième paire (LP2), comportant une prise centrale par laquelle le dispositif indicateur (LA, LB) est raccordé pour fournir les signalisations d'appel et d'occupation.

5. Installation suivant une des revendications 1 à 4, caractérisée en ce que le dispositif de commutation (A, a1, a2) commandé par touches est commandé par les touches du clavier d'appel (TA1).

6. Installation suivant la revendication 5, caractérisée en ce que le dispositif de commutation commandé par touches est un relais (A), un contact (a1) de ce relais raccordant, dans sa position de repos, la prise centrale du troisième transformateur (Ü7) au dispositif indicateur (LA) pour fournir la signalisation d'appel, ainsi qu'à une entrée de blocage (SRS) de l'émetteur d'appel (RS) tandis que, dans son état de travail, ce contact raccorde cette prise centrale au dispositif indicateur (LB) pour fournir la signalisation d'occupation.

Fig. 1

0 032 205

Fig. 2

0 032 205

Fig. 3